# EUROPÄISCHE PATENTANMELDUNG

(11) **EP 4 311 634 A1**
(43) Veröffentlichungstag der Anmeldung: **31.01.2024**
(21) Anmeldenummer: 23186439.8
(22) Anmeldetag: 19.07.2023
(51) Int. Cl.: B25J 13/08, B25J 15/00, B25J 19/00

(54) **NEUARTIGES VERFAHREN UND SYSTEM ZUR MONTAGE EINER WERKSTÜCKBEZOGENEN BLECHWERKSTÜCKGREIFEINRICHTUNG**

(30) Priorität: 29.07.2022 DE 102022207867
(71) Anmelder: VOLKSWAGEN AG, 38440 Wolfsburg (DE)
(72) Erfinder: Kappey, Dr. Jens, 38448 Wolfsburg (DE); Kotzian, Mathias, 38446 Wolfsburg (DE); Bäume, Dr. Tobias, 38162 Cremlingen (OT Schandelah) (DE); Bozkurt, Ahmet, 38110 Braunschweig (DE)

(57) **Zusammenfassung**

Die Erfindung betrifft ein Verfahren zur Montage einer werkstückbezogenen Blechwerkstückgreifeinrichtung (200), wobei mehrere Greifelemente (220) an einer Trägerkonstruktion (210) befestigt werden. Das Verfahren umfasst die Schritte:
- Bereitstellen der Trägerkonstruktion (210) und der daran zu befestigenden Greifelemente (220);
- Fixieren der Trägerkonstruktion (210) in einer Halterung (110); und
- Befestigen der Greifelemente (220) an der Trägerkonstruktion (210), wobei jedes Greifelement (220) in einer vorbestimmten Relativposition und Relativausrichtung an der Trägerkonstruktion (210) befestigt wird, und wobei beim Befestigen der Greifelemente (220) die jeweilige Relativposition und Relativausrichtung mithilfe eines temporär an dem jeweiligen Greifelement (220) angebrachten Positionsgebers (131) erfasst werden.

Die Erfindung betrifft ferner auch ein System (100) zur Montage einer werkstückbezogenen Blechwerkstückgreifeinrichtung (200), mit einer Halterung (110), wenigstens einem Positionsgeber (131) und einer Anzeigeeinrichtung (140).

## Beschreibung

Die Erfindung betrifft gemäß Oberbegriff des Patentanspruchs 1 ein Verfahren zur Montage einer werkstückbezogenen Blechwerkstückgreifeinrichtung. Die Erfindung betrifft ferner auch ein mehrere Komponenten umfassendes System zur Montage einer werkstückbezogenen Blechwerkstückgreifeinrichtung.

Zur Automatisierung von Pressenanlagen für die Blechbearbeitung, die eine einzelne Presse oder auch mehrere Pressen umfassen können, kommen Robotersysteme, Feedersysteme oder dergleichen zum Einsatz, die mittels Blechwerkstückgreifeinrichtungen die Blechwerkstücke automatisiert einlegen, entnehmen und/oder weitertransportieren. Die Blechwerkstückgreifeinrichtungen sind werkstückbezogen bzw. werkstückgebunden, d. h. individuell an das jeweils aufzunehmende Blechwerkstück angepasst und entsprechend aufgebaut. Für gewöhnlich weist eine solche Blechwerkstückgreifeinrichtung eine Trägerkonstruktion oder dergleichen auf, an der blechwerkstückspezifisch mehrere zum Greifen bzw. Halten wenigstens eines Blechwerkstücks geeignete Greifelemente, wie insbesondere Klemmgreifer, Sauggreifer, Magnetgreifer und dergleichen, angeordnet sind. Solche Blechwerkstückgreifeinrichtung werden auch als Greifermodule oder bei entsprechendem Aufbau auch als Greiferspinnen bezeichnet.

Um den Aufbau einer werkstückbezogenen Werkstückgreifeinrichtung für die Pressenautomatisierung zu vereinfachen, wird in der DE 10 2014 204 366 A1 vorgeschlagen, dass die exakten Positionen und Ausrichtungen der an einem Träger zu befestigenden werkstückspezifischen Komponenten (wie bspw. Vakuumsauger, Pneumatikspanner, Magnetgreifer, Schaufel- oder Gabelheber, Sensoren und/oder dergleichen) automatisiert aus einem CAD-Datensatz des zu greifenden Werkstücks ermittelt und mithilfe eines Bewegungsautomaten, insbesondere Roboters, angezeigt werden. Somit kann der Aufbau ohne Pressenwerkzeug, das mit der aufzubauenden Werkstückgreifeinrichtung bedient werden soll, erfolgen. Der Aufbau kann vor allem aber auch ohne das Werkstück, das mit der aufzubauenden Werkstückgreifeinrichtung gegriffen werden soll, erfolgen.

Die DE 10 2019 113 764 A1 beschreibt ein Verfahren zur Konfiguration einer werkstückbezogenen Werkstückhalteeinrichtung für die Pressenautomatisierung, wobei wenigstens ein werkstückspezifisches Halteelement der Werkstückhalteeinrichtung an einem Träger der Werkstückhalteeinrichtung befestigt wird. Das Verfahren zeichnet sich durch die folgenden Verfahrensschritte aus: (a) Abbilden eines realen Bildes wenigstens eines werkstückspezifischen Halteelements an einer Anzeigeeinrichtung und (b) Ausgeben einer zumindest das wenigstens eine werkstückspezifische Halteelement betreffenden Konfigurationsinformation an der Anzeigeeinrichtung, wobei die Konfigurationsinformation zumindest eine Soll-Information zu einer relativen Soll-Ausrichtung und/oder zu einer relativen Soll-Position relativ zu dem Träger (und/oder relativ zu einem weiteren werkstückspezifischen Halteelement) umfasst. In einer bevorzugten Ausführungsform erfolgt die Darstellung der Soll-Information überlagernd zu dem ebenfalls an der Anzeigeeinrichtung abgebildeten bzw. angezeigten realen Bild des Halteelements, bevorzugt des Halteelements und zugleich zumindest abschnittsweise des Trägers. In einem weiteren Verfahrensschritt kann es optional vorgesehen sein, dass die Konfiguration bzw. die Anpassung eines werkstückspezifischen Halteelements an ein Werkstück auf Grundlage einer Konfigurationsinformation erfolgt, typischerweise durch manuellen Eingriff eines Werkers bzw. eines Produktionsmitarbeiters.

Ausgehend von dem zuvor erläuterten Stand der Technik soll mit der Erfindung eine weitere Möglichkeit aufgezeigt werden, wie die Montage einer werkstückbezogenen Blechwerkstückgreifeinrichtung vereinfacht werden kann.

Dies gelingt mit dem erfindungsgemäßen Verfahren des Patentanspruchs 1. Mit dem nebengeordneten Patentanspruch erstreckt sich die Erfindung auch auf ein erfindungsgemäßes System, welches insbesondere zur Durchführung des erfindungsgemäßen Verfahrens vorgesehen und entsprechend ausgebildet ist. Vorteilhafte Weiterbildungen und Ausgestaltungen der Erfindung ergeben sich analog für beide Erfindungsgegenstände aus den abhängigen Patentansprüchen, der nachfolgenden Erfindungsbeschreibung (dies schließt ausdrücklich auch alle optional und beispielhaft beschriebenen Merkmale ein) und der Zeichnung.

Das erfindungsgemäße Verfahren zur Montage (oder gleichbedeutend zum Aufbau bzw. zur Anfertigung) einer werkstückbezogenen Blechwerkstückgreifeinrichtung (im Folgenden auch nur als Blechwerkstückgreifeinrichtung bezeichnet), wobei bei der Montage mehrere Greifelemente an einer Trägerkonstruktion befestigt werden, umfasst zumindest die folgenden Schritte:
- Bereitstellen der Trägerkonstruktion und der daran zu befestigenden Greifelemente;
- Fixieren der Trägerkonstruktion in einer Halterung, insbesondere derart, dass die fixierte Trägerkonstruktion eine definierte Relativlage zur Halterung und/oder eine definierte Raumlage, d. h. eine definierte Position und Ausrichtung im Montageraum, aufweist;
- Befestigen bzw. Montieren der Greifelemente an der Trägerkonstruktion, wobei jedes Greifelement in einer (für das jeweilige Greifelement) vorbestimmten Relativposition und Relativausrichtung (d. h. relativ zur Trägerkonstruktion) an der Trägerkonstruktion befestigt wird.

Die Montage bzw. der Aufbau der werkstückbezogenen Blechwerkstückgreifeinrichtung erfolgt bevorzugt anhand eines zuvor erstellten Bauplans, dem die Relativpositionen und Relativausrichtungen der an der Trägerkonstruktion zu befestigenden Greifelemente entnommen werden können. Der Bauplan liegt insbesondere als CAD-Datensatz vor, der wiederum aus einem CAD-Datensatz des zu greifenden Blechwerkstücks abgeleitet sein kann.

Bei der Trägerkonstruktion handelt es sich insbesondere um eine aus Rohren, Balken bzw. Schienen, Profilträgern und dergleichen gebildete Rahmenstruktur, insbesondere eine Baum- bzw. Spinnenstruktur, wobei die Trägerkonstruktion im Wesentlichen auch nur aus einem einzelnen Rohr, Balken, Träger und dergleichen bestehen kann. Bei den Greif(er)elementen handelt es sich insbesondere um Klemmgreifer, Saug- bzw. Vakuumgreifer, Magnetgreifer, Greifschaufeln bzw. -gabeln und dergleichen. Die Greifelemente können sowohl direkt als auch indirekt (bspw. über Verlängerungen bzw. Arme) an die Trägerkonstruktion angebracht bzw. mit der Trägerkonstruktion verbunden werden. Die Befestigung eines Greifelements an der Trägerkonstruktion, womit insbesondere eine lösbare Befestigung gemeint ist, kann durch wenigstens eine Schraubverbindung erfolgen, wobei sowohl eine direkte Verschraubung oder auch eine indirekte Verschraubung durch ein zusätzliches Verbindungs- bzw. Halterungselement (bspw. eine Rohr- bzw. Klemmschelle oder dergleichen) vorgesehen sein kann. Die Befestigung kann aber auch auf andere Weise, bspw. mittels Klemm- oder Spannmechanismus oder dergleichen, erfolgen.

Das Befestigen der Greifelemente an der Trägerkonstruktion kann derart erfolgen, dass das jeweilige Greifelement zunächst positioniert und ausgerichtet und dann befestigt wird. Alternativ kann das Befestigen auch derart erfolgen, dass das jeweilige Greifelement zunächst an der Trägerkonstruktion angebracht und nur vorbefestigt wird. Danach kann das Greifelement noch positioniert und/oder ausgerichtet sowie abschließend befestigt werden. Letzteres ermöglicht eine pragmatische Vorgehensweise, bei der erst mehrere Greifelemente an der Trägerkonstruktion vorbefestigt und danach positioniert und/oder ausgerichtet werden.

Erfindungsgemäß ist vorgesehen, dass beim Befestigen der Greifelemente, insbesondere für jedes Greifelement, die jeweilige Relativposition und Relativausrichtung mithilfe eines temporär, d. h. nur vorübergehend, an dem jeweiligen Greifelement angebrachten Positionsgebers erfasst werden.

Ein Positionsgeber ist eine aktive oder passive Einrichtung, deren Position und Ausrichtung innerhalb eines Raums detektiert werden kann. Ein solcher Positionsgeber kann daher auch als Detektionseinrichtung bezeichnet werden. Bevorzugt ist der Positionsgeber Bestandteil einer Positionsüberwachungsvorrichtung für den Montageraum oder Montageplatz, in dem bzw. an dem die werkstückbezogene Blechwerkstückgreifeinrichtung montiert bzw. aufgebaut wird. Zu dieser Positionsüberwachungsvorrichtung gehört bevorzugt auch wenigstens ein raumfestes Positionserfassungsmodul, das insbesondere oberhalb des Montageraums oder Montageplatzes angeordnet ist. Das Positionserfassungsmodul kann auch an der Halterung angeordnet sein. Das Positionserfassungsmodul kann auch an der Trägerkonstruktion der zu montierenden Blechwerkstückgreifeinrichtung angeordnet werden, insbesondere an einer eigens dafür ausgewählten Stelle.

Mithilfe des Positionserfassungsmoduls kann die Position und Ausrichtung des Positionsgebers erfasst werden. Dies gelingt insbesondere durch eine berührungslose Kommunikation zwischen dem Positionserfassungsmodul und dem Positionsgeber, bspw. mittels Laser- oder Ultraschalltechnologie. Der Positionsgeber kann daher als Sender (Transmitter), insbesondere als Ultraschallsender, und/oder als Empfänger, insbesondere als Ultraschallempfänger, ausgebildet sein. Die Steuerung der Positionsüberwachungsvorrichtung sowie die Auswertungen werden insbesondere von einer Computereinrichtung vorgenommen, welche mit entsprechender Software ausgestattet ist. Ähnliche Systeme sind für andere Anwendungen aus dem Stand der Technik bekannt (siehe bspw. EP 1 645 921 B1).

Der Positionsgeber wird in geeigneter Weise definiert an einem zu befestigenden Greifelement angebracht, derart, dass die Position und die Ausrichtung des Positionsgebers mit der Position und der Ausrichtung des Greifelements korrelieren. Aus der dann erfassten Position und Ausrichtung des Positionsgebers, womit insbesondere die momentane Position und Ausrichtung des Positionsgebers in dem vom Positionserfassungsmodul überwachten Bereich gemeint ist, kann dann auf die Relativposition und Relativausrichtung des Greifelements (relativ zur Trägerkonstruktion) geschlossen werden. Dies kann insbesondere in Echtzeit erfolgen. Der Positionsgeber kann ein Schraub-, Steck-, Magnet- oder Klemmverbindungselement oder Ähnliches aufweisen, mit dem dieser definiert und wieder lösbar am Greifelement angebracht bzw. daran festgemacht werden kann. Der Positionsgeber kann direkt am Greifelement angebracht werden, womit insbesondere gemeint ist, dass der Positionsgeber an dem Teil des Greifelements angebracht wird, der mit den Blechwerkstücken in Kontakt kommt. Der Positionsgeber kann aber auch indirekt am Greifelement angebracht werden, womit insbesondere gemeint ist, dass der Positionsgeber an einem für die Befestigung des Greifelements an der Trägerkonstruktion vorgesehenen Teil, bspw. einem Teil einer Schraubverbindung oder eines Klemm- oder Spannmechanismus, angebracht wird. Gleichwirkend kann der Positionsgeber auch definiert an einem Greifelementhalter angebracht werden, welcher mit definierter Position und Ausrichtung an der Trägerkonstruktion befestigt wird, um später ein Greifelement daran befestigen zu können.

Die jeweils mithilfe des Positionsgebers erfasste Relativposition und Relativausrichtung eines Greifelements kann mittels Anzeigeeinrichtung angezeigt bzw. ausgegeben werden, insbesondere in Echtzeit. Insbesondere ist dies eine visuelle Anzeigeeinrichtung. Eine visuelle Anzeigeeinrichtung kann ein Display sein, das in Sichtweite einer ausführenden bzw. assistierenden Person angeordnet sein kann. Das Display kann auch am Positionsgeber angeordnet sein. Eine visuelle Anzeigeeinrichtung kann aber auch eine Datenbrille (Smartglasses) oder dergleichen sein, die von einer ausführenden bzw. assistierenden Person getragen werden kann und insbesondere Augmented Reality ermöglicht. Eine visuelle Anzeigeeinrichtung kann auch ein Projektor (bspw. ein LCD-Projektor) oder dergleichen sein, der die relevanten Informationen auf eine dafür vorgesehene Fläche projiziert. Bevorzugt ist vorgesehen, dass an bzw. mit der Anzeigeeinrichtung auch die Abweichungen der erfassten Relativposition und Relativausrichtung von Sollvorgaben bzw. Sollwerten für das jeweilige Greifelement angezeigt werden (bspw. wie in der DE 10 2019 113 764 A1 beschrieben), insbesondere in Echtzeit. Dies kann insbesondere mittels Datenbrille per Augmented Reality erfolgen. Die ausführende bzw. assistierende Person kann dann die Relativposition und/oder die Relativausrichtung verändern und an die Sollvorgaben anpassen. Die Sollvorgaben, insbesondere die Sollposition und die Sollausrichtung, werden vorzugsweise aus einem CAD-Datensatz oder Bauplan (der aus den CAD-Daten abgeleitet sein kann) der Werkstückgreifeinrichtung und/oder des zu greifenden Blechwerkstückteils ermittelt und gegebenenfalls an eine bekannte Raumlage der Trägerkonstruktion angepasst, sodass für jedes Greifelement Sollvorgaben verfügbar sind. Eine visuelle Anzeigeeinrichtung kann auch dazu verwendet werden, der ausführenden bzw. assistierenden Person das als nächste zu befestigende Greifelement einschließlich Sollposition und Sollausrichtung anzuzeigen, insbesondere basierend einem CAD-Datensatz oder Bauplan der Werkstückgreifeinrichtung. Die Anzeigeeinrichtung wird bevorzugt mithilfe der Computereinrichtung gesteuert. Bevorzugt ist vorgesehen, dass die Anzeigeeinrichtung erst auf Anforderung, bspw. durch Knopfdruck, aktiviert wird. Anstelle einer visuellen Anzeigeeinrichtung kann bspw. auch eine akustische Anzeigeeinrichtung verwendet werden, die geeignete akustische Signale (bspw. Quittierungs- und Fehlermeldungen; s. u.) ausgibt.

Nach dem Fixieren der Trägerkonstruktion in der Halterung kann deren Position und Ausrichtung mithilfe wenigstens eines Positionsgebers erfasst werden, was auch als Einmessen der Trägerkonstruktion bezeichnet werden kann. Bei diesem Positionsgeber handelt es sich insbesondere um denselben Positionsgeber, die auch für das Positionieren und Ausrichten der Greifelemente verwendet wird. Der Positionsgeber kann an wenigstens einer vorgegebenen Stelle der Trägerkonstruktion angebracht werden. Analog zu den vorausgehenden Erläuterungen kann damit die exakte Position und Ausrichtung der Trägerkonstruktion im Montageraum bzw. am Montageplatz bestimmt bzw. ermittelt werden. Die Position und/oder Ausrichtung kann dann gegebenenfalls geändert bzw. an Sollvorgaben angepasst werden oder die ermittelte Position und Ausrichtung können dann im Weiteren zur Bestimmung von Relativpositionen und Relativausrichtungen der Greifelemente herangezogen werden.

Bevorzugt wird ein einzelner Positionsgeber verwendet, welcher in einer bestimmten oder gegebenenfalls auch beliebigen Reihenfolge, insbesondere mit automatischer Positionserkennung und Zuordnung, an den Greifelementen angebracht wird. Alternativ können mehrere Positionsgeber verwendet werden, insbesondere derart, dass diese gleichzeitig an verschiedene Greifelemente angebracht sind und insbesondere mit demselben Positionserfassungsmodul kommunizieren bzw. von diesem überwacht werden. Somit können gleichzeitig die Relativpositionen und Relativausrichtungen mehrerer Greifelemente erfasst werden. Es kann außerdem auch vorgesehen sein, dass die Positionsgeber miteinander kommunizieren und/oder sich gegenseitig referenzieren, z. B. derart, dass wenigstens ein Positionsgeber bedarfsweise als Repeater für einen abgeschatteten Positionsgeber fungiert. Außerdem kann vorgesehen sein, dass mehrere Personen an der Montage einer Blechwerkstückgreifeinrichtung beteiligt sind und für jede Person wenigstens ein dieser Person zugeordneter Positionsgeber verwendet wird.

Die Greifelemente können mittels Schraubverbindungen an der Trägerkonstruktion befestigt werden (s. o.). Bevorzugt ist hierbei vorgesehen, dass die Schraubverbindungen mit einem Schraubwerkzeug angezogen werden und dass dabei die Position und die Ausrichtung des Schraubwerkzeugs überwacht werden. Dies ermöglicht eine zusätzliche Kontrolle bzw. einen zusätzlichen Kontrollschritt. Mit Ausrichtung ist insbesondere die Ausrichtung der Schraubachse gemeint. Die Überwachung des Schraubwerkzeugs gelingt insbesondere mithilfe eines eigens dafür am Schraubwerkzeug angebrachten Positionsgebers, der analog zu den vorausgehenden Erläuterungen mit dem Positionserfassungsmodul einer Positionsüberwachungsvorrichtung für den Montageraum oder Montageplatz kommuniziert bzw. von diesem überwacht wird. Aus der beim Anziehen einer Schraubverbindung erfassten Position und Ausrichtung des Schraubwerkzeugs kann durch einen automatisierten Vergleich mit Sollvorgaben auf die korrekte Relativposition und Relativausrichtung des zu befestigenden Greifelements geschlossen werden. Dies geschieht typischerweise mithilfe der Computereinrichtung. Im Weiteren kann dann eine Quittierungsmeldung (i. O.-Meldung) oder eine Fehlermeldung an der Anzeigeeinrichtung angezeigt werden. Eine Quittierungsmeldung und/oder Fehlermeldung kann auch akustisch ausgegeben werden, insbesondere mittels Lautsprecher oder dergleichen. Falls eine Fehlermeldung angezeigt wird, kann die ausführende bzw. assistierende Person eine Korrektur vornehmen und die Relativposition und/oder die Relativausrichtung des betreffenden Greifelements anpassen bzw. verändern.

Das erfindungsgemäße System zur Montage einer werkstückbezogenen Blechwerkstückgreifeinrichtung, wobei bei der Montage bzw. beim Aufbau der Blechwerkstückgreifeinrichtung mehrere Greifelemente an einer Trägerkonstruktion befestigt werden, umfasst zumindest folgende Komponenten:
- eine Halterung zur Fixierung der Trägerkonstruktion, insbesondere derart, dass die fixierte Trägerkonstruktion eine definierte Raumlage und/oder Relativlage aufweist, wobei diese Halterung als starrer Ständer (Galgen), als Montagetisch oder auch als Mehrachsroboter ausgebildet sein kann;
- wenigstens ein Positionsgeber, der dafür vorgesehen ist, temporär an einem zu befestigenden Greifelement angebracht zu werden, um damit bzw. mit dessen Hilfe die Relativposition und Relativausrichtung des betreffenden Greifelements zu erfassen, wobei dieser Positionsgeber insbesondere Bestandteil einer Positionsüberwachungsvorrichtung ist;
- eine Anzeigeeinrichtung, insbesondere eine Datenbrille, ein Display oder ein Projektor, wobei diese Anzeigeeinrichtung dafür vorgesehen ist, die mithilfe des Positionsgebers erfasste Relativposition und Relativausrichtung des zu befestigenden Greifelements und/oder etwaige Abweichungen (der erfassten Relativposition und Relativausrichtung) von Sollvorgaben anzuzeigen bzw. auszugeben;
- sowie insbesondere auch eine Computereinrichtung, die insbesondere als zentrales Steuergerät ausgebildet sein kann.

Weiterbildungen und Ausgestaltungen des erfindungsgemäßen Systems ergeben sich analog zum erfindungsgemäßen Verfahren.

Mit der Erfindung gelingt ohne real vorhandenes Blechwerkstück bzw. Werkstückmuster, also blechwerkstückfrei bzw. werkstückmusterfrei, eine sehr präzise Montage bzw. ein sehr exakter Aufbau einer werkstückbezogenen Blechwerkstückgreifeinrichtung, sodass dann ohne nennenswerte Nacharbeit, insbesondere ohne aufwendige Nachjustierung der Greifelemente, die Inbetriebnahme dieser Blechwerkstückgreifeinrichtung erfolgen kann. Daraus ergeben sich auch Zeit- und Kostenvorteile. Die Montage bzw. Anfertigung der für eine Pressenstraße oder Ähnliches benötigten Blechwerkstückgreifeinrichtungen kann daher schon zu einem sehr frühen Zeitpunkt und insbesondere parallel zum Aufbau der Werkzeuge erfolgen. Auch spätere konstruktive Änderungen an einer Blechwerkstückgreifeinrichtung können mit der Erfindung vergleichweise einfach baulich umgesetzt werden. Die Erfindung eignet sich analog auch für das Befestigen von Sensoren sowie sonstigen Teilen und Elementen (bspw. Verlängerungen bzw. Armen, Abzweigungen, Verbindungselementen etc.) an der Trägerkonstruktion. Im Übrigen kann die Erfindung in analoger Weise auch für die Überarbeitung einer bereits vorhandenen Blechwerkstückgreifeinrichtung, bspw. zur Anpassung der Blechwerkstückgreifeinrichtung an ein anderes Blechwerkstück, oder auch bei der Reparatur einer beschädigten Blechwerkstückgreifeinrichtung, bspw. nach einer Kollision, angewendet werden. Die Erfindung begünstigt außerdem auch eine Datendurchgängigkeit von der Konstruktion über die Montage bzw. Anfertigung bis zur Inbetriebnahme einer werkstückbezogenen Blechwerkstückgreifeinrichtung, sodass die CAD-Daten jederzeit mit der realen Blechwerkstückgreifeinrichtung übereinstimmen (und umgekehrt).

Nachfolgend wird die Erfindung in nicht einschränkender Weise anhand der Zeichnung näher erläutert, wobei weitere mögliche Merkmale und Details vorausgehend erläutert sind. Die in der Zeichnung gezeigten und/oder nachfolgend erläuterten Merkmale können, auch unabhängig von konkreten Merkmalskombinationen, allgemeine Merkmale der Erfindung sein und die Erfindung entsprechend weiterbilden. Die Zeichnung umfasst eine Figur.

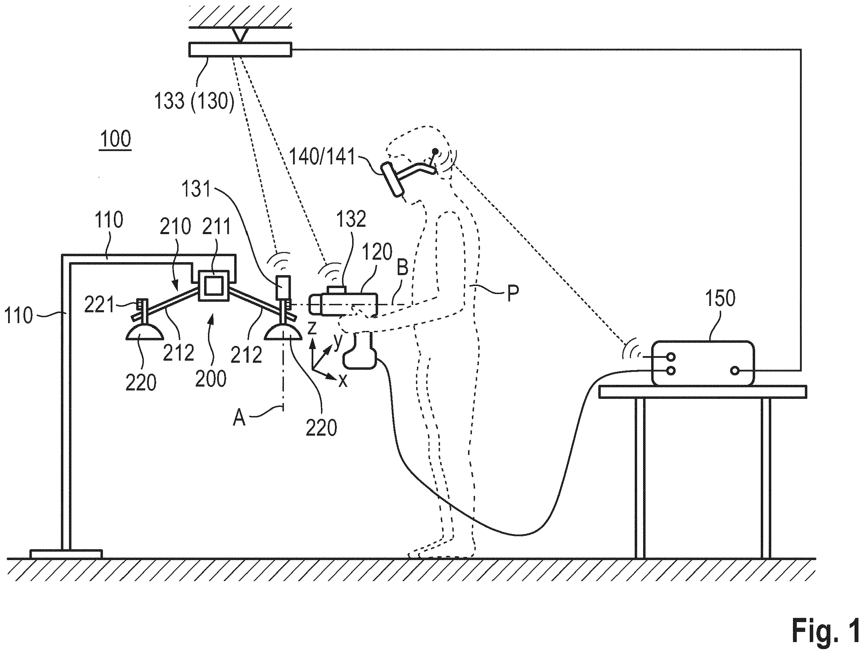

- Fig. 1: zeigt schematisch ein erfindungsgemäßes System zur Montage einer Blechwerkstückgreifeinrichtung und veranschaulicht das Befestigen eines Greifelements an einer Trägerkonstruktion.

Das in Fig. 1 gezeigte System 100 zur Montage einer werkstückbezogenen Blechwerkstückgreifeinrichtung 200 umfasst eine als Ständer ausgebildete Halterung 110 für die Trägerkonstruktion 210 der zu montierenden Blechwerkstückgreifeinrichtung 200 und eine Positionsüberwachungsvorrichtung 130, zu der ein oberhalb des Montageraums bzw. Montageplatzes ortfest angeordnetes Positionserfassungsmodul 133 sowie ein Positionsgeber 131 und ein weiterer Positionsgeber 132 gehören, wie nachfolgend noch näher erläutert. Die Positionsgeber 131, 132 können als Sender (Transmitter) und/oder als Empfänger ausgebildet sein. Entsprechend kann das Positionserfassungsmodul 133 als Empfänger und/oder Sender ausgebildet sein. Ferner ist eine Anzeigeeinrichtung 140 und eine als zentrales Steuergerät fungierende Computereinrichtung 150 umfasst. Die Computereinrichtung 150 ist in geeigneter Weise (bspw. mittels Kabel oder auch kabellos) mit dem Positionserfassungsmodul 133 und der Anzeigeeinrichtung 140 verbunden.

Die Montage bzw. der Aufbau einer werkstückbezogenen Blechwerkstückgreifeinrichtung 200 kann ohne real vorhandenes Blechwerkstück bzw. Werkstückmuster, insbesondere ausgehend von einem als CAD-Datensatz vorliegenden Bauplan der Blechwerkstückgreifeinrichtung 200, folgende Schritte umfassen, die zumindest teilweise von einer Person P ausgeführt werden können:
- Die vorgefertigte Trägerkonstruktion 210, die bspw. einen zentralen Balken 211 und davon abragende Arme 212 aufweist, wird in der Halterung 110 fixiert, insbesondere derart, dass diese bezüglich des Montageraums eine definierte Raumlage und/oder bezüglich der Halterung 110 eine definierte Relativlage aufweist, wobei die Raumlage und/oder Relativlage auch erfasst werden kann (sogenanntes Einmessen), wie oben beschrieben.
- Die Greifelemente 220 werden direkt oder indirekt (bspw. über Verlängerungen oder dergleichen) an der fixierten Trägerkonstruktion 210 befestigt, wobei jedes Greifelement 220 in einer durch den Bauplan vorbestimmten Relativposition und Relativausrichtung (d. h. relativ zur Trägerkonstruktion 210) an der Trägerkonstruktion 210 befestigt wird.

Erfindungsgemäß werden beim Befestigen der Greifelemente 220 die jeweilige Relativposition und Relativausrichtung mithilfe des (ersten) Positionsgebers 131 erfasst bzw. ermittelt. Hierzu wird der Positionsgeber 131 temporär an das jeweils zu befestigende Greifelement 220 angebracht, wie obenstehend erläutert. Im Weiteren können dann automatisch mithilfe des Positionserfassungsmoduls 133 und durch entsprechende Auswertung mittels der Computereinrichtung 150 die Position und Ausrichtung des Positionsgebers 131 bestimmt werden, die mit der Position des Greifelements 220 (veranschaulicht durch die Raumkoordinaten xyz) und der Ausrichtung des Greifelements 220 (veranschaulicht durch die Achse A) korrelieren, und daraus die Relativposition und Relativausrichtung des Greifelements 220 (relativ zur Trägerkonstruktion 210) ermittelt bzw. berechnet werden. Bevorzugt erfolgt auch ein Vergleich von erfasster bzw. ermittelter Relativposition und Relativausrichtung mit Sollvorgaben, die für das betreffende Greifelement 220 aus dem Bauplan bzw. CAD-Datensatz der Blechwerkstückgreifeinrichtung 200 abgeleitet werden können.

Die für das jeweilige Greifelement 220 erfasste Relativposition und Relativausrichtung sowie gegebenenfalls auch die Abweichungen von Sollvorgaben können der Person P an der Anzeigeeinrichtung 140 angezeigt werden, insbesondere in Echtzeit. Die Anzeigeeinrichtung 140 ist hier als Datenbrille 141 ausgebildet, die insbesondere Augmented Reality ermöglicht. Die Anzeigeeinrichtung 140 kann aber auch ein Display oder ein Projektor sein. Die Anzeigeeinrichtung 140 wird von der Computereinrichtung 150 gesteuert. Somit kann die Person P während des Montage- bzw. Befestigungsvorgangs die Relativposition und Relativausrichtung jedes Greifelements 220 überwachen und gegebenenfalls anpassen bzw. verändern.

Bevorzugt werden die Greifelemente 220 mittels Schraubverbindungen 221 an der Trägerkonstruktion 210 befestigt. Die Schraubverbindungen 221 können mit einem Schraubwerkzeug 120 angezogen werden, wobei es sich vorzugsweise um ein motorisch angetriebenes und handgeführtes Schraubwerkzeug handelt. Bei dem Schraubwerkzeug 120 handelt es sich insbesondere um einen Elektroschrauber. Während des Anziehens kann automatisch die Position (veranschaulicht durch die Raumkoordinaten xyz) und die Ausrichtung (veranschaulicht durch die Achse B) des Schraubwerkzeugs 120 mithilfe des Weiteren (zweiten) Positionsgebers 132, der am Schraubwerkzeug 120 angebracht ist, überwacht werden, sodass hierüber auf indirekte Weise nochmals die jeweilige Relativposition und Relativausrichtung des Greifelements 220 kontrolliert werden kann. (Beim Anziehen einer Schraubverbindung korrelieren die Position und Ausrichtung des Schraubwerkzeugs 120 mit der Relativposition und Relativausrichtung des Greifelements 220.) Das Ergebnis kann, vorzugsweise in Echtzeit, an der Anzeigeeinrichtung 140 bzw. Datenbrille 141 angezeigt werden, insbesondere derart, dass wenigstens eine entsprechende Information in geeigneter Weise dem Sichtfeld der Person P hinzugefügt wird. Bevorzugt wird eine Quittierungsmeldung ausgegeben bzw. angezeigt, falls die erfasste Position und Ausrichtung des Schraubwerkzeugs 120 mit den Sollvorgaben für die betreffende Schraubverbindung 121 übereinstimmen, und/oder eine Fehlermeldung wird ausgegeben bzw. angezeigt, falls die erfasste Position und/oder Ausrichtung des Schraubwerkzeugs 120 von den Sollvorgaben für die betreffende Schraubverbindung 121 abweichen.

Ferner kann das zum Anziehen der jeweiligen Schraubverbindung 221 vorgesehene Anzugsdrehmoment automatisch ermittelt werden, bspw. anhand hinterlegter Werte bei automatischer Erfassung der momentanen Position des Schraubwerkzeugs 120, und dann das Schraubwerkzeug 120 automatisch entsprechend eingestellt werden. Das Schraubwerkzeug 120 ist hierzu in geeigneter Weise (bspw. mittels Kabel oder gegebenenfalls auch kabellos) mit der Computereinrichtung 150 verbunden.

### Bezugszeichenliste

- 100: System
- 110: Halterung
- 120: Schraubwerkzeug
- 130: Positionsüberwachungsvorrichtung
- 131: Positionsgeber
- 132: Positionsgeber
- 133: Positionserfassungsmodul
- 140: Anzeigeeinrichtung
- 141: Datenbrille
- 150: Computereinrichtung
- 200: Blechwerkstückgreifeinrichtung
- 210: Trägerkonstruktion
- 211: Balken
- 212: Arm
- 220: Greifelement
- 221: Schraubverbindung
- A: Achse
- B: Achse
- P: Person
- xyz: Raumkoordinaten

## Patentansprüche

1. Verfahren zur Montage einer werkstückbezogenen Blechwerkstückgreifeinrichtung (200), wobei mehrere Greifelemente (220) an einer Trägerkonstruktion (210) befestigt werden, umfassend die Schritte:
- Bereitstellen der Trägerkonstruktion (210) und der daran zu befestigenden Greifelemente (220);
- Fixieren der Trägerkonstruktion (210) in einer Halterung (110);
- Befestigen der Greifelemente (220) an der Trägerkonstruktion (210), wobei jedes Greifelement (220) in einer vorbestimmten Relativposition und Relativausrichtung an der Trägerkonstruktion (210) befestigt wird;
**dadurch gekennzeichnet, dass**
beim Befestigen der Greifelemente (220) die jeweilige Relativposition und Relativausrichtung mithilfe eines temporär an dem jeweiligen Greifelement (220) angebrachten Positionsgebers (131) erfasst werden.

2. Verfahren nach Anspruch 1,
**dadurch gekennzeichnet, dass**
die erfasste Relativposition und Relativausrichtung mittels Anzeigeeinrichtung (140) angezeigt werden.

3. Verfahren nach einem der vorhergehenden Ansprüche,
**dadurch gekennzeichnet, dass**
nach dem Fixieren der Trägerkonstruktion (210) in der Halterung (110) die Raumlage der Trägerkonstruktion (110) mithilfe des Positionsgebers (131) erfasst wird.

4. Verfahren nach einem der vorhergehenden Ansprüche,
**dadurch gekennzeichnet, dass**
mehrere Positionsgeber (131) verwendet werden, die gleichzeitig an verschiedene Greifelemente (220) angebracht werden.

5. Verfahren nach einem der vorhergehenden Ansprüche,
**dadurch gekennzeichnet, dass**
die Greifelemente (220) mittels Schraubverbindungen (221) an der Trägerkonstruktion (210) befestigt werden, wobei die Schraubverbindungen (221) mit einem Schraubwerkzeug (120) angezogen werden und dabei die Position (xyz) und die Ausrichtung (B) des Schraubwerkzeugs (120) überwacht werden.

6. System (100) zur Montage einer werkstückbezogenen Blechwerkstückgreifeinrichtung (200), wobei mehrere Greifelemente (220) an einer Trägerkonstruktion (210) befestigt werden, umfassend folgende Komponenten:
- eine Halterung (110) zur Fixierung der Trägerkonstruktion (210);
- wenigstens einen Positionsgeber (131), der dafür vorgesehen ist, temporär an einem zu befestigenden Greifelement (220) angebracht zu werden, um damit die Relativposition und Relativausrichtung des Greifelements (220) zu erfassen;
- eine Anzeigeeinrichtung (140), die dafür vorgesehen ist, die erfasste Relativposition und Relativausrichtung des Greifelements (220) und/oder etwaige Abweichungen von Sollvorgaben anzuzeigen.

7. System (100) nach Anspruch 6,
**dadurch gekennzeichnet, dass**
die Anzeigeeinrichtung (140) eine Datenbrille (141) ist.
